# EUROPEAN PATENT APPLICATION

(11) **EP 4 760 811 A1**
(43) Date of publication of application: **17.06.2026**
(21) Application number: 25218797.6
(22) Date of filing: 26.11.2025
(51) Int. Cl.: H01M 4/36, H01M 4/587, H01M 4/133

(54) **ANODE FOR LITHIUM BATTERY, AND RECHARGEABLE LITHIUM BATTERY INCLUDING THE SAME**

(30) Priority: 26.11.2024 KR 20240170311
(71) Applicant: SAMSUNG SDI CO., LTD., Yongin-si, Gyeonggi-do 17084 (KR)
(72) Inventor: SHIN, Donghyun, 17084 Yongin-si, Gyeonggi-do (KR); KIM, Jaehong, 17084 Yongin-si, Gyeonggi-do (KR); KWON, Hyejin, 17084 Yongin-si, Gyeonggi-do (KR); AHN, Sunyhik, 17084 Yongin-si, Gyeonggi-do (KR); KIM, Hyunwoo, 17084 Yongin-si, Gyeonggi-do (KR); SEO, Sungjin, 17084 Yongin-si, Gyeonggi-do (KR); KIM, Dannbee, 17084 Yongin-si, Gyeonggi-do (KR)
(74) Representative: Michalski Hüttermann & Partner mbB

(57) **Abstract**

The present disclosure relates to a negative electrode for a rechargeable lithium battery and a rechargeable lithium battery including the negative electrode. A negative electrode for a rechargeable lithium battery includes a negative electrode current collector, and a negative electrode active material layer on the negative electrode current collector. The negative electrode active material layer includes a first negative electrode active material layer and a second negative electrode active material layer laminated on the negative electrode current collector. Each of the first and second negative electrode active material layers includes natural graphite and artificial graphite. An average particle diameter (D50) of the natural graphite is smaller than an average particle diameter of the artificial graphite.

## Description

### CROSS-REFERENCE TO RELATED APPLICATIONS

This patent application claims priority of Korean Patent Application No. 10-2024-0170311, filed on November 26, 2024.

### BACKGROUND

The present disclosure herein relates to a negative electrode for a rechargeable lithium battery, and a rechargeable lithium battery including the negative electrode.

With increasing presence of electronic devices that use batteries, such as, e.g., mobile phones, laptop computers, electric vehicles, and the like, the demand for rechargeable batteries with high energy density and high capacity is increasing. Accordingly, improving the performance of rechargeable lithium batteries may be advantageous.

A rechargeable lithium battery includes a positive electrode and a negative electrode, the positive and negative electrodes containing active materials capable of intercalation and deintercalation of lithium ions, and an electrolyte. The rechargeable lithium battery produces electrical energy through the oxidation and reduction reactions when lithium ions are intercalated into and deintercalated from the positive electrode and negative electrode.

### SUMMARY

Examples of the present disclosure describe a negative electrode for a rechargeable lithium battery having high capacity and desired or improved charging characteristics.

Examples of the present disclosure is to provide a rechargeable lithium battery having a desired or improved rapid charging performance.

According to an example embodiment of the present disclosure, an electrolyte solution for a rechargeable lithium battery may include a non-aqueous organic solvent, a lithium salt.

A negative electrode for a rechargeable lithium battery according to an example embodiment of the present disclosure includes a negative electrode current collector, and a negative electrode active material layer on the negative electrode current collector. The negative electrode active material layer includes a first negative electrode active material layer and a second negative electrode active material layer, laminated, e.g., sequentially laminated, on the negative electrode current collector. Each of, or at least one of, the first and second negative electrode active material layers includes natural graphite and artificial graphite. An average particle diameter (D50) of the natural graphite is smaller than an average particle diameter of the artificial graphite. A ratio of the weight of the natural graphite to the weight of the artificial graphite in the second negative electrode active material layer is in a range of ≥ 1 to ≤ 5.

Natural and artificial graphite can *inter alia* be distinguished based on their specific surface area (SSA). Whilst natural graphite has a surface area of 1.8-2.2 m²/g, artificial graphite has a surface area of 1.2 m²/g or less.

Particle diameter indicates an average particle diameter (D50), which refers to the diameter of particles at a cumulative volume of about 50 vol% in the particle size distribution.

For example, a laser scattering method may be utilized to measure the average particle diameter. In the laser scattering method, target particles are dispersed in a dispersion medium, introduced into a commercial laser diffraction particle diameter measurement instrument (e.g., MT3000 of Microtrac), and irradiated with ultrasonic waves of about 28 kHz at an output of about 60 W. The average particle diameter (D50), corresponding to about 50% of the particle size distribution, may then be calculated within the measurement instrument.

A negative electrode for a rechargeable lithium battery according to an example embodiment of the present disclosure includes a negative electrode current collector, and a negative electrode active material layer on the negative electrode current collector. The negative electrode active material layer includes natural graphite and artificial graphite. The negative electrode active material layer includes a first region adjacent to the negative electrode current collector and a second region adjacent to an upper surface of the negative electrode active material layer. The content of the natural graphite included in each of the first and second regions is in a range of ≥ 45 wt% to ≤ 80 wt%. An average particle diameter of the natural graphite is smaller than an average particle diameter of the artificial graphite.

A negative electrode for a rechargeable lithium battery according to an example embodiment of the present disclosure includes a negative electrode current collector, and a negative electrode active material layer on the negative electrode current collector. The negative electrode active material layer includes a first negative electrode active material layer and a second negative electrode active material layer, laminated, e.g., sequentially laminated, on the negative electrode current collector. The first negative electrode active material layer includes a first natural graphite and a first artificial graphite. The second negative electrode active material layer includes a second natural graphite and a second artificial graphite. An average particle diameter of the second natural graphite is smaller than an average particle diameter of the first natural graphite. A ratio of the weight of the second natural graphite to the weight of the second artificial graphite in the second negative electrode active material layer is in a range of ≥ 1 to ≤ 3.

### BRIEF DESCRIPTION OF THE FIGURES

The accompanying drawings are included to provide a further understanding of the present disclosure, and are incorporated in and constitute a part of this specification. The drawings illustrate example embodiments of the present disclosure and, together with the description, explain principles of the present disclosure.
FIG. 1 is a simplified conceptual diagram showing a rechargeable lithium battery according to example embodiments of the present disclosure.
FIGS. 2 to 5 are schematic diagrams showing rechargeable lithium batteries according to example embodiments, where FIG. 2 is a cylindrical battery, FIG. 3 is a prismatic battery, and FIGS. 4 and 5 are pouch-type batteries.
FIG. 6 to FIG. 8 are cross-sectional views of negative electrodes for rechargeable lithium batteries according to example embodiments of the present disclosure.

### DETAILED DESCRIPTION

In order to sufficiently understand the configuration and effect of the present disclosure, example embodiments of the present disclosure are described with reference to the accompanying drawings. It should be noted, however, that the present disclosure is not limited to the example embodiments, and may be implemented in various forms. Rather, the example embodiments are provided only to disclose the present disclosure completely, and let those skilled in the art fully know the scope of the present disclosure.

In the description, when an element is referred to as being "on" another element, the element can be formed directly on the other element, or intervening elements may be present therebetween. In the drawings, thicknesses of some components may be exaggerated for effectively explaining the technical contents. Like reference numerals refer to like elements throughout the specification.

Unless otherwise specified in the description, a singular form may also include a plural form. In addition, unless otherwise specified, "A or B" may mean "including A, including B, or including A and B." As used herein, "comprises" and/or "comprising" do not exclude the presence or addition of one or more other elements.

In the description, each of the phrases "A or B," "at least one of A and B," "at least one of A or B," "A, B or C," "at least one of A, B and C," and "at least one of A, B, or C" may include any one of the items listed together in the corresponding phrase, or all possible combinations thereof.

In the description, the term "combination thereof" may refer to a mixture, a stack, a composite, a copolymer, an alloy, a blend, or a reaction product.

Unless otherwise specially defined in this description, a particle diameter may be an average particle diameter. Also, a particle diameter indicates an average particle diameter (D50), which refers to the diameter of particles at a cumulative volume of about 50 vol% in particle size distribution. The average particle diameter (D50) may be measured by a method widely known to those skilled in the art, for example, by a particle size analyzer, or by using, e.g., a transmission electron microscope (TEM) image or a scanning electron microscope (SEM) image. Alternatively, the average particle diameter may be measured by a measurement device using dynamic light-scattering, wherein data analysis is conducted to count the number of particles for each particle size range, and an average particle diameter (D50) value may then be obtained through calculation. Also, a laser scattering method may be utilized to measure the average particle diameter. In the laser scattering method, target particles are dispersed in a dispersion medium, then introduced into a commercial laser diffraction particle diameter measurement instrument (e.g., MT3000 of Microtrac), and irradiated to ultrasonic waves of about 28 kHz at an output of about 60 W, and the average particle diameter (D50) based on about 50% of particle diameter distribution may be calculated in the measurement instrument.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

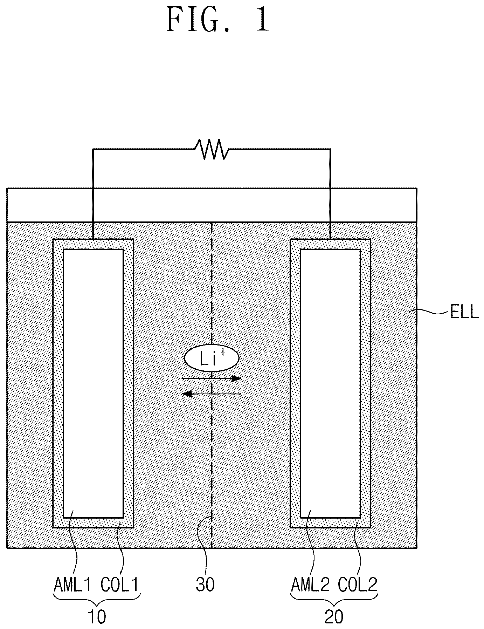

FIG. 1 illustrates a simplified conceptual diagram showing a rechargeable lithium battery according to an example embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be or include a medium by which lithium ions are transferred between the positive electrode 10 and the negative electrode 20. In the electrolyte ELL, the lithium ions may move through the separator 30 toward one of the positive electrode 10 and the negative electrode 20.

### Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material, and further include a binder and/or a conductive material.

For example, the positive electrode 10 may further include an additive that can constitute a sacrificial positive electrode.

An amount of the positive electrode active material may be in a range of ≥ 90 wt% to ≤ 99.5 wt% relative to 100 wt% of the positive electrode active material layer AML1. An amount of each of the binder and the conductive material may be in a range of ≥ 0.5 wt% to ≤ 5 wt% relative to 100 wt% of the positive electrode active material layer AML1.

The binder may improve attachment of positive electrode active material particles to each other, and improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may provide an electrode with conductivity, and any suitable conductive material that does not cause an adverse or undesired chemical change in a battery may be used as the conductive material. The conductive material may include, for example, a carbon-based material such as at least one of natural graphite, artificial graphite, carbon black, acetylene black, Ketjen black, carbon fiber, carbon nano-fiber, and carbon nano-tube; a metal powder or metal fiber containing one or more of copper, nickel, aluminum, and silver; a conductive polymer such as a polyphenylene derivative; or a mixture thereof.

Aluminum (Al) may be used as the current collector COL1, but the present disclosure is not limited thereto.

### Positive Electrode Active Material

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is or includes at least one of cobalt, manganese, nickel, and a combination thereof.

The composite oxide may include a lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulae below. LiₐA_{1-b}X_{b}O_{2-c}D_{c} (where 0.90 ≤a≤1.8, 0≤b≤0.5, and 0≤c≤0.05); LiₐMn_{2-b}X_{b}O_{4-c}D_{c} (where 0.90≤a≤1.8, 0≤b≤ 0.5, and 0≤c≤0.05); LiₐNi_{1-b-c}Co_{b}X_{c}O_{2-α}D_{α} (where 0.90≤a≤1.8, 0≤b≤0.5, 0≤c≤0.5, and 0<α<2); LiₐNi_{1-b-c}Mn_{b}X_{c}O_{2-α}D_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0≤b≤0.9, 0≤c≤0.5, 0≤d≤0.5, and 0≤e≤0.1); LiₐNiG_{b}O₂ (where 0.90≤a≤ 1.8 and 0.001≤b≤0.1); LiₐCoG_{b}O₂ (where 0.90≤a≤1.8 and 0.001≤b≤0.1); LiₐMn_{1-b}G_{b}O₂ (where 0.90≤a≤1.8 and 0.001≤b≤ 0.1); LiₐMn₂G_{b}O₄ (where 0.90≤a≤1.8 and 0.001≤b≤0.1); LiₐMn_{1-g}G_{g}PO₄ (where 0.90≤a≤1.8 and 0≤g≤0.5); Li_{(3-f})Fe₂(PO₄)₃ (where 0≤f≤2); LiₐFePO₄ (where 0.90≤ a≤1.8).

In the chemical formulae above, A may be or include at least one of Ni, Co, Mn, or a combination thereof, X may be or include at least one of Al, Ni, Co, Mn, Cr, Fe, Mg, Sr, V, a rare-earth element, or a combination thereof, D may be or include at least one of O, F, S, P, or a combination thereof, G may be or include at least one of Al, Cr, Mn, Fe, Mg, La, Ce, Sr, V, or a combination thereof, and L¹ may be or include at least one of Mn, Al, or a combination thereof.

For example, the positive electrode active material may be or include a high-nickel-based positive electrode active material having a nickel amount of equal to or greater than 80 mol%, equal to or greater than 85 mol%, equal to or greater than 90 mol%, equal to or greater than 91 mol%, or equal to or greater than 94 mol% and equal to or less than 99 mol% relative to 100 mol% of metal devoid of lithium in lithium transition metal composite oxide. The high-nickel-based positive electrode active material may achieve high capacity, and thus may be applicable to a high-capacity and high-density rechargeable lithium battery.

### Negative Electrode 20

The negative electrode 20 for a rechargeable lithium battery may include a current collector COL2, and a negative electrode active material layer AML2 positioned on the current collector COL2. The negative electrode active material layer AML2 may include a negative electrode active material, and may further include a binder and/or a conductive material.

For example, the negative electrode active material layer AML2 may include a negative electrode active material in a range of ≥ 90 wt% to ≤ 99 wt%, a binder in a range of ≥ 0.5 wt% to ≤ 5 wt%, and a conductive material in a range of ≥ 0 wt% to ≤ 5 wt%.

The binder may improve attachment of negative electrode active material particles to each other, and improve attachment of the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include at least one of Na, K, or Li.

The dry binder may include a fibrillizable polymer material, for example, at least one of polytetrafluoroethylene, polyvinylidene fluoride, polyvinylidene fluoride-hexafluoropropylene copolymer, polyethylene oxide, or a combination thereof.

The conductive material may provide an electrode with conductivity, and any suitable conductive material that does not cause a chemical change in a battery may be used as the conductive material. For example, the conductive material may include a carbon-based material such as at least one of natural graphite, artificial graphite, carbon black, acetylene black, Ketjen black, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

The current collector COL2 may include at least one of a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include at least one of a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as non-shaped, sheet-shaped, flake-shaped, sphere-shaped, or fiber-shaped natural or artificial graphite, and the amorphous carbon may include at least one of soft carbon, hard carbon, mesophase pitch carbon, or calcined coke.

The lithium metal alloy may include an alloy of lithium and metal that is or includes at least one of Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include at least one of silicon, silicon-carbon composite, SiOₓ (where 0<x≤2), Si-Q alloy (where Q is or includes at least one of alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include at least one of Sn, SnO₂, a Sn-based alloy, a combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and may also include an amorphous carbon coating layer positioned on a surface of the core.

The Si-based negative electrode active material or the Sn-based negative electrode active material may be used in combination with a carbon-based negative electrode active material.

### Separator 30

Based on a type of the rechargeable lithium battery, the separator 30 may be present between positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one side, or on opposite sides, of the porous substrate, the coating layer including an organic material, an inorganic material, or a combination thereof.

The porous substrate may be or include a polymer layer including at least one of polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be a copolymer or mixture including two or more of the materials mentioned above.

The organic material may include a polyvinylidenefluoride-based copolymer or a (meth)acrylic copolymer.

The inorganic material may include an inorganic particle such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a combination thereof, but the present disclosure is not limited thereto.

The organic material and the inorganic material may be mixed in one coating layer, or may be present as a stack of a coating layer including the organic material and a coating layer including an inorganic material.

### Electrolyte ELL

The electrolyte ELL for a rechargeable lithium battery may include a non-aqueous organic solvent and a lithium salt.

The non-aqueous organic solvent may constitute a medium for transmitting ions that participate in an electrochemical reaction of the battery.

The non-aqueous organic solvent may include at least one of a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include ethyl alcohol or isopropyl alcohol. The aprotic solvent may include at least one of nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be used alone or in a mixture of two or more solvents.

In addition, when a carbonate-based solvent is used, a cyclic carbonate and a linear carbonate may be mixed, and the cyclic carbonate and the linear carbonate may be mixed in a volume ratio in a range of ≥ 1:1 to ≤ 1:9.

The lithium salt may be or include a material that dissolves in the non-aqueous organic solvent to constitute a supply source of lithium ions in a battery and helps enabling an operation of a rechargeable lithium battery and in promoting the movement of lithium ions between positive and negative electrodes. The lithium salt may include, for example, at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

### Rechargeable Lithium Battery

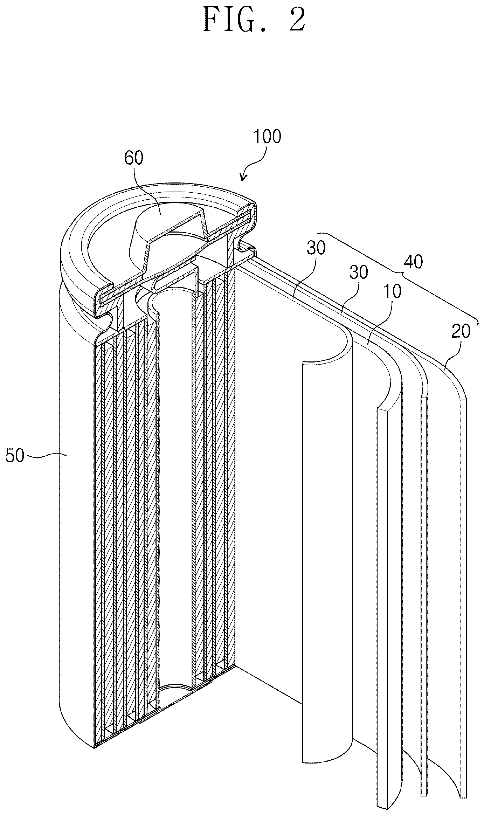

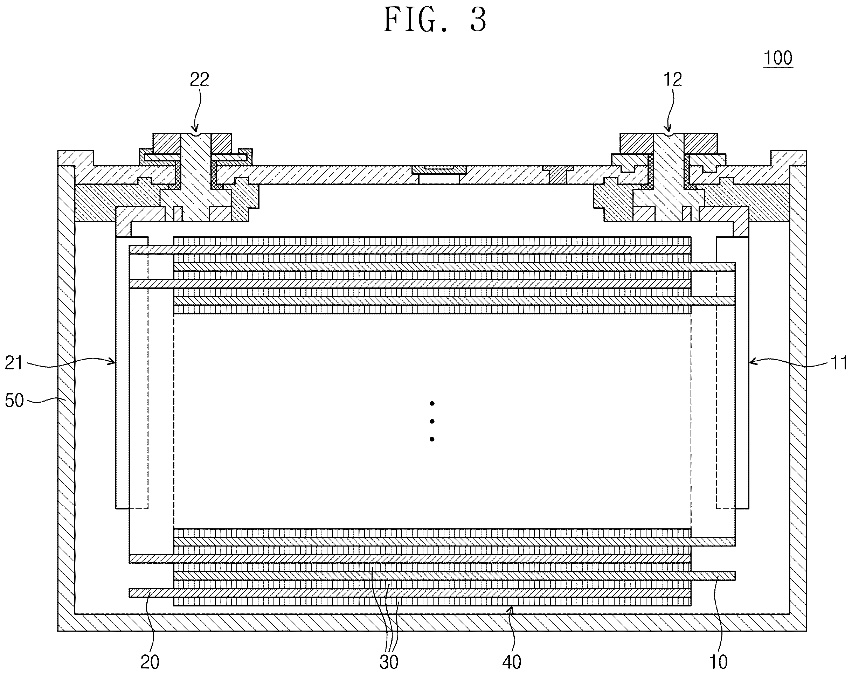

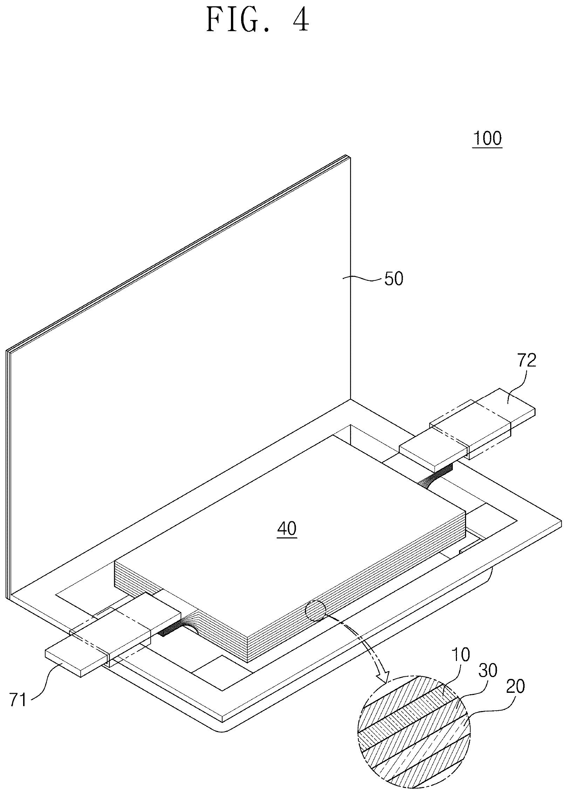

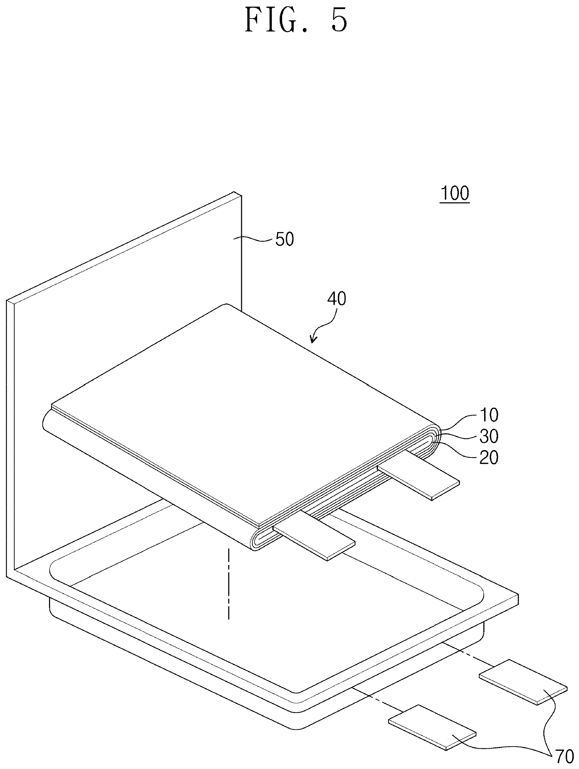

Based on a shape of a rechargeable lithium battery, the rechargeable lithium battery may be classified into cylindrical, prismatic, pouch, and coin types. FIGS. 2 to 5 illustrate simplified diagrams showing a rechargeable lithium battery according to an example embodiment, with FIG. 2 showing a cylindrical battery, FIG. 3 showing a prismatic battery, and FIGS. 4 and 5 showing pouch-type batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 4 and 5, the rechargeable lithium battery 100 may include an electrode tab 70 illustrated in FIG. 5, or a positive electrode tab 71 and a negative electrode tab 72 illustrated in FIG. 4, the electrode tabs 70/71/72 forming an electrical path for externally inducing a current generated in the electrode assembly 40.

A rechargeable lithium battery according to an example embodiment of the present disclosure may be applicable to, e.g., automotive vehicles, mobile phones, and/or any other electrical devices, but the present disclosure is not limited thereto.

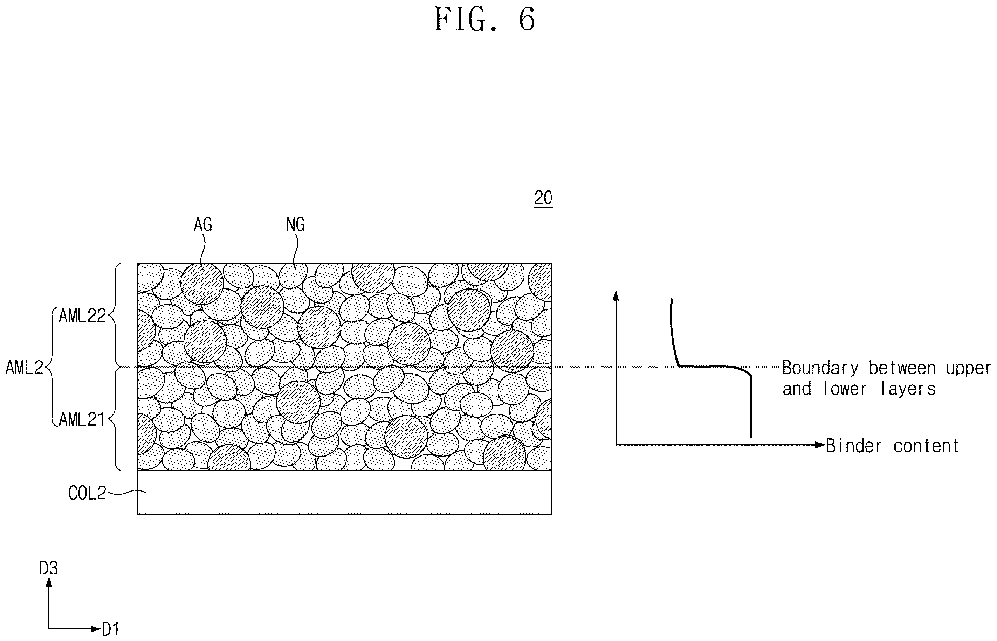

Each of FIGS. 6 to 8 is a cross-sectional view of a negative electrode for a rechargeable lithium battery according to an example embodiment of the present disclosure. Hereinafter, with reference to FIGS. 6 to 8, a negative electrode for a rechargeable lithium battery according to example embodiments of the present disclosure, and a rechargeable lithium battery including the negative electrode are described in more detail.

### Negative Electrode Active Material

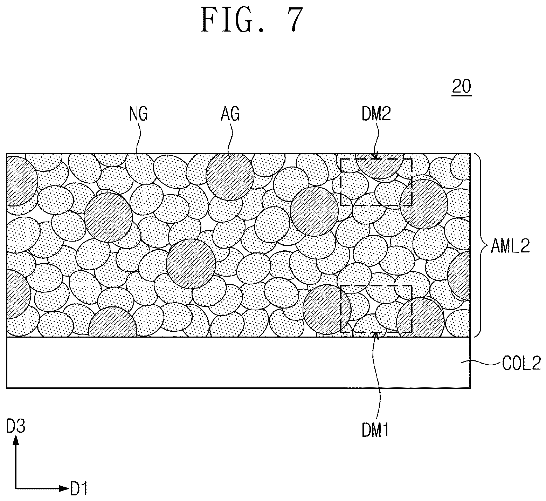

Referring to FIGS. 6 and 7, a negative electrode 20 for a rechargeable lithium battery according to example embodiments of the present disclosure may include natural graphite NG and artificial graphite AG as negative electrode active materials. The natural graphite NG according to examples of the present disclosure may be improved natural graphite NG in which the orientation, particle size, and the like are adjusted to be advantageous for rapid charging. The natural graphite NG according to examples of the present disclosure may have different properties compared to general natural graphite, and the properties thereof are described in detail.

For example, the natural graphite NG according to example embodiments of the present disclosure may have a ratio of the peak intensity of the (002) plane to the peak intensity of the (110) plane (I(002)/I(110)) in a range of ≥ 40 to ≤ 80, ≥ 45 to ≤ 75, or ≥ 50 to ≤ 70, when measured by XRD using CuKα rays. For example, the ratio of the peak intensity of the (002) plane to the peak intensity of the (110) plane (I(002)/I(110)) may be equal to ≤ 60.

The ratio of the peak intensity of the (002) plane to the peak intensity of the (110) plane (I(002)/I(110)) is an indicator related to the orientation of the natural graphite NG, and a smaller peak intensity ratio I(002)/I(110) may indicate that the crystal grain orientation of the natural graphite is random. Conversely, the higher the peak intensity ratio, the more the crystal grains are oriented parallel to the negative electrode active material layer.

When the orientation of the natural graphite NG is too high, it may be challenging for lithium ions to be intercalated/deintercalated between graphite layers, which deteriorates the charge and discharge characteristics, and an ion diffusion path within the electrode may be limited, which may increase diffusion resistance. When the orientation of natural graphite NG is too low, the electrical conductivity of the negative electrode may decrease due to the disordered arrangement of graphite, and lithium ions may not be intercalated uniformly between the graphite layers, which may cause inefficiency in the intercalation/deintercalation process of lithium ions.

When measuring XRD using CuKα rays, and when the ratio of the peak intensity of the (002) plane to the peak intensity of the (110) plane (I(002)/I(110)) satisfies the range described above, the natural graphite NG may exhibit desired or improved rapid charging performance and desired or improved conductivity.

The natural graphite NG according to example embodiments of the present disclosure may have an average particle diameter (D50) in a range of ≥ 3 µm to ≤ 15 µm, ≥ 4 µm to ≤ 12 µm, or ≥ 5 µm to ≤ 10 µm. For example, the average particle diameter of the natural graphite NG may be equal to ≤ 7 µm. In an example embodiment, the average particle diameter may be measured by a particle size analyzer. The average particle diameter may indicate the diameter (D50) of particles having a cumulative volume of ≥ 50% by volume in particle size distribution.

When the average particle diameter of the natural graphite NG is too large, the diffusion path of lithium ions may increase, which may slow down a charging speed. When the average particle diameter of the natural graphite NG is too small, a specific surface area may increase, which may increase side reactions with an electrolyte. When the average particle diameter of the natural graphite NG satisfies the above-described range, desired or improved charging characteristics may be exhibited without causing excessive side reactions.

The natural graphite NG according to example embodiments of the present disclosure may have a Brunauer-Emmett-Teller (BET) specific surface area in a range of ≥ 1.5 m²/g to ≤ 3 m²/g, ≥ 1.6 m²/g to ≤ 2.4 m²/g, or ≥ 1.8 m²/g to ≤ 2.2 m²/g. For example, the BET specific surface area of the natural graphite NG may be equal to ≤ 2.0 m²/g. In an example embodiment, the specific surface area may be measured by a BET method. For example, the specific surface area may be measured by degassing a measurement target at about 300°C for about 1 hour, and performing N₂ adsorption/desorption at about 77K using a BET measurement equipment (BEL-SORP-mini, Nippon Bell).

The natural graphite NG according to example embodiments of the present disclosure may have a specific capacity in a range of ≥ 350 mAh/g to ≤ 380 mAh/g, ≥ 355 mAh/g to ≤ 370 mAh/g, or ≥ 355 mAh/g to ≤ 360 mAh/g. For example, the specific capacity of the natural graphite NG may be equal to ≤ 358 mAh/g. In an example embodiment, the specific capacity may be obtained by measuring the charge and discharge capacity of a half cell including the natural graphite NG as a negative electrode active material.

When the natural graphite NG is improved in properties such as the orientation, average particle diameter, specific surface area, and specific capacity as described above, the natural graphite NG may exhibit desired or improved rapid charging performance.

Generally, artificial graphite has higher structural stability than natural graphite, which allows for smooth movement of lithium ions, and has the advantage of being advantageous for rapid charging. Accordingly, for desired or improved rapid charging characteristics, it is common to increase the artificial graphite content of the negative electrode active material layer, especially the upper negative electrode active material layer where lithium ions are firstly intercalated/deintercalated during the charge and discharge process.

When improved natural graphite NG with various characteristics controlled as described above is used as the natural graphite, the rapid charging performance of a battery may be improved by increasing the natural graphite NG content rather than increasing the artificial graphite AG content of the upper negative electrode active material layer. For example, the negative electrode 20 according to example embodiments of the present disclosure may exhibit desired or improved rapid charging performance with equal to or greater natural graphite NG content in the upper negative electrode active material layer AML22 than the artificial graphite AG content.

The natural graphite with the orientation, average particle diameter, and the like, controlled as described above, may be produced by the method below.

For example, minerals may be collected from ores containing natural graphite, and impurities may be removed. After removing impurities, the graphite may be pulverized to a desired size, and graphite particles may be spheroidized. The spheroidized natural graphite may be mixed with pitch to form an aggregate. Thereafter, a first heat treatment process may be performed on the aggregate, and the surface thereof may be coated with pitch. By performing a second heat treatment on the natural graphite with the pitch coated on the surface, improved natural graphite may be obtained.

The artificial graphite AG according to example embodiments of the present disclosure may have a larger average particle diameter than the natural graphite NG. For example, the average particle diameter of the artificial graphite AG may be in a range of ≥ 10 µm to ≤ 20 µm, ≥ 12 µm to ≤ 18 µm, or ≥ 12 µm to ≤ 15 µm. Since the negative electrode active material layer simultaneously or contemporaneously includes natural graphite NG having a relatively small average particle diameter and artificial graphite AG having a relatively large average particle diameter, an electrode density may be improved, and ion and electron transfer paths may be optimized.

Although not shown, the negative electrode 20 for a rechargeable lithium battery according to example embodiments of the present disclosure may further include a silicon-based negative electrode active material as the negative electrode active material. The silicon-based negative electrode active material may be or includes at least one of silicon, a silicon-carbon composite, SiOx (0 < x ≤ 2), a Si-Q alloy (where Q is or includes at least one of an alkali metal, an alkaline earth metal, a Group 13 element, a Group 14 element (excluding Si), a Group 15 element, a Group 16 element, a transition metal, a rare earth element, and a combination thereof), or a combination thereof.

The silicon-carbon composite may be or include a composite of silicon and amorphous carbon. According to an example embodiment, the silicon-carbon composite may be in the form of silicon particles with amorphous carbon coated on the surface of the silicon particles. For example, the silicon-carbon composite may include a secondary particle (core) in which silicon primary particles are assembled, and an amorphous carbon first coating layer (shell) located on the surface of the secondary particle. The amorphous carbon may be positioned between the silicon primary particles, so that, for example, the silicon primary particles may be coated with the amorphous carbon. The secondary particles may be dispersed and present in an amorphous carbon matrix.

With respect to 100 wt% of the total negative electrode active material including the natural graphite NG, the artificial graphite AG, and the silicon-based negative electrode active material, the content of the silicon-based negative electrode active material may be in a range of ≥ 10 wt% or less. For example, the content of the silicon-based negative electrode active material may be in a range of ≥ 3 wt% to ≤ 10 wt%, or ≥ 5 wt% to ≤ 8 wt%.

### Negative Electrode 20

Referring to FIG. 6, a negative electrode 20 for a rechargeable lithium battery according to an example embodiment may include a negative electrode current collector COL2, a first negative electrode active material layer AML21 on the negative electrode current collector, and a second negative electrode active material layer AML22 on the first negative electrode active material layer AML21. Each of, or at least one of, the first and second negative electrode active material layers AML21 and AML22 may include the above-described natural graphite NG and artificial graphite AG. Although not illustrated, each of, or at least one of, the first and second negative electrode active material layers AML21 and AML22 may further include the above-described silicon-based negative electrode active material as the negative electrode active material.

The content of natural graphite NG in the first negative electrode active material layer AML21 may be in a range of ≥ 45 wt% to ≤ 80 wt%, or ≥ 50 wt% to ≤ 75 wt%, with respect to 100 wt% of the total of the first negative electrode active material layer AML21. The content of artificial graphite AG in the first negative electrode active material layer AML21 may be in a range of ≥ 20 wt% to ≤ 50 wt%, or ≥ 25 wt% to ≤ 45 wt%, with respect to 100 wt% of the total of the first negative electrode active material layer AML21. The ratio of the weight of the natural graphite NG to the weight of the artificial graphite AG in the first negative electrode active material layer AML21 may be in a range of ≥ 1 to ≤ 10, ≥ 1 to ≤ 5, or ≥ 1 to ≤ 3.

The content of the natural graphite NG in the second negative electrode active material layer AML22 may be in a range of ≥ 45 wt% to ≤ 80 wt%, or ≥ 50 wt% to ≤ 75 wt%, with respect to 100 wt% of the total of the second negative electrode active material layer AML22. The content of the artificial graphite AG in the second negative electrode active material layer AML22 may be in a range of ≥ 20 wt% to ≤ 50 wt%, or ≥ 25 wt% to ≤ 45 wt%, with respect to 100 wt% of the total of the second negative electrode active material layer AML21. The ratio of the weight of the natural graphite NG to the weight of the artificial graphite AG in the second negative electrode active material layer AML22 may be in a range of ≥ 1 to ≤ 10, ≥ 1 to ≤ 5, or ≥ 1 to ≤ 3.

The ratio of the weight of the natural graphite NG to the weight of the artificial graphite AG in the second negative electrode active material layer AML22 may be the same as, or different from, the ratio of the weight of the natural graphite NG to the weight of the artificial graphite AG in the first negative electrode active material layer AML21.

Since the negative electrode 20 for a rechargeable lithium battery according to examples of the present disclosure includes improved natural graphite NG with controlled orientation, particle size, and the like, as the negative electrode active material, the upper negative electrode active material layer AML22 may have desired or improved rapid charge characteristics while including an amount of the natural graphite NG that is equal to or greater than the amount of the artificial graphite AG.

The thickness ratio of the first negative electrode active material layer AML21 and the second negative electrode active material layer AML22 may be in a range of ≥ 3:1 to ≤ 1:3, or ≥ 2:1 to ≤ 1:2, for example, equal to about 1:1. When the content of the natural graphite NG included in each layer and the thickness ratio of each layer satisfy the above-described range, the negative electrode 20 for a rechargeable lithium battery may have desired or improved rapid charging performance along with desired or improved capacity.

Each of, or at least one of, the first and second negative electrode active material layers AML21 and AML22 may further include a binder. The content of the binder in the first negative electrode active material layer AML21 may be greater than the content of the binder in the second negative electrode active material layer AML22. Since the first negative electrode active material layer AML21, which is in direct contact with the negative electrode current collector, is required to secure not only the adhesive force between the negative electrode active material particles, but also the adhesive force between the negative electrode active material and the negative electrode current collector COL2, the binder content may be greater than the binder content of the second negative electrode active material layer AML22. For example, the binder content in the first negative active material layer AML21 may be in a range of ≥ 1.5 to ≤ 5 times, or ≥ 2 to ≤ 4 times the binder content in the second negative active material layer AML22.

According to an example embodiment, the first negative active material layer AML21 and the second negative active material layer AML22 may be distinguished through the change in the binder content. As described above, since the first negative active material layer AML21 has the binder content that is ≥ 1.5 times or more higher than the binder content of the second negative active material layer AML22, each layer may be distinguished by confirming a portion where the binder content changes abruptly, as shown in FIG. 6.

Referring to FIG. 7, the negative electrode 20 for a rechargeable lithium battery according to another example embodiment of the present disclosure may include a negative electrode current collector COL2 and a negative electrode active material layer AML2 on the negative electrode current collector COL2. The negative electrode active material layer AML2 may include the above-described natural graphite NG and artificial graphite AG. The negative electrode active material layer AML2 may further include the above-described silicon-based negative electrode active material. The negative electrode active material layer AML2 may include a first region DM1 adjacent to the negative electrode current collector COL2, and a second region DM2 adjacent to the upper surface of the negative electrode active material layer AML2.

The first region DM1 may be defined as a hexahedral space (for example, about 10 µm * 10 µm * 10 µm) centered on a point located at a predetermined or desired distance in a third direction D3 from the negative electrode current collector COL2. The predetermined or desired distance may be in a range of ≥ 5 µm to ≤ 50 µm. Alternatively, the predetermined or desired distance may be a length corresponding to a range of ≥ 0.1 to ≤ 0.5 times the total thickness of the negative electrode active material layer AML2.

The second region DM2 may be defined as a hexahedral space (for example, about 10 µm * 10 µm * 10 µm) centered on a point located at a predetermined distance in the third direction D3 from the interface between the separator 30 and the negative electrode 20. The predetermined distance may be in a range of ≥ 5 µm to ≤ 50 µm. Alternatively, the predetermined distance may be a length corresponding to a range of ≥ 0.1 to ≤ 0.5 times the total thickness of the negative electrode active material layer AML2.

The content of the natural graphite NG in the first region DM1 may be in a range of ≥ 45 wt% to ≤ 80 wt%, or ≥ 50 wt% to ≤ 75 wt%. The content of the artificial graphite AG in the first region DM1 may be in a range of ≥ 20 wt% to ≤ 50 wt% or ≥ 25 wt% to ≤ 45 wt%. The ratio of the weight of the natural graphite NG to the weight of the artificial graphite AG in the first region DM1 may be in a range of ≥ 1 to ≤ 10, ≥ 1 to ≤ 5 or ≥ 1 to ≤ 3.

The content of the natural graphite NG in the second region DM2 may be in a range of ≥ 45 wt% to ≤ 80 wt% or ≥ 50 wt% to ≤ 75 wt%. The content of the artificial graphite AG in the second region DM2 may be in a range of ≥ 20 wt% to ≤ 50 wt% or ≥ 25 wt% to ≤ 45 wt%. The ratio of the weight of the natural graphite NG to the weight of the artificial graphite AG in the second region DM2 may be in a range of ≥ 1 to ≤ 10, ≥ 1 to ≤ 5, or ≥ 1 to ≤ 3.

The ratio of the weight of the natural graphite NG in the second region DM2 to the weight of the natural graphite NG in the first region DM1 may be in a range of ≥ 0.6 to ≤ 1.2, or ≥ 0.9 to ≤ 1.0. For example, the content of the natural graphite NG included in the first region DM1 and the second region DM2 may be similar. Since the negative electrode 20 for a rechargeable lithium battery according to examples of the present disclosure includes improved natural graphite NG with controlled orientation, particle size, and the like, as the negative electrode active material, the second region DM2 adjacent to the separator may have desired or improved rapid charging performance while including the natural graphite NG at a level similar to the level of the first region DM1.

Each of, or at least one of, the first and second regions DM1 and DM2 may further include a binder. The content of the binder in the first region DM1 may be greater than the content of the binder in the second region DM2. Since the first region DM1 adjacent to the negative electrode current collector COL2 is required to secure not only the adhesive force between the negative electrode active material particles, but also the adhesive force between the negative electrode active material and the negative electrode current collector COL2, the binder content may be greater than the binder content in the second region DM2. For example, the binder content in the first region DM1 may be in a range of ≥ 1.5 to ≤ 10 times, or ≥ 2 to ≤ 8 times, or ≥ 2 to ≤ 4 times the binder content in the second region DM2.

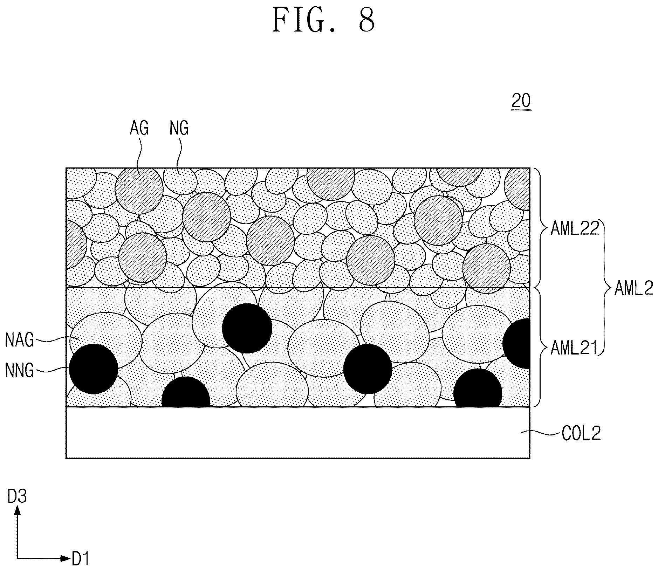

Referring to FIG. 8, the negative electrode 20 for a rechargeable lithium battery according to another example embodiment of the present disclosure may include a negative electrode current collector COL2, a first negative electrode active material layer AML21 on the negative electrode current collector, and a second negative electrode active material layer AML22 on the first negative electrode active material layer AML21. The first negative electrode active material layer AML21 may include first natural graphite NNG and first artificial graphite NAG, and the second negative electrode active material layer AML21 may include second natural graphite NG and second artificial graphite AG.

The second natural graphite AG may be improved natural graphite NG with the orientation, particle diameter, and the like controlled as described above with reference to FIGS. 6 and 7. For example, the second natural graphite NG may have a ratio of the peak intensity of the (002) plane to the peak intensity of the (110) plane (I(002)/I(110)) in a range of 50 to 70, when XRD is measured using CuKα rays, and may have an average particle size (D50) in a range of ≥ 3 µm to ≤ 15 µm, ≥ 4 µm to ≤ 12 µm, or ≥ 5 µm to ≤ 10 µm.

Unlike the second natural graphite NG, the first natural graphite NNG may be or include natural graphite which orientation, particle diameter, and the like are not precisely controlled. For example, the first natural graphite NNG may have a ratio of the peak intensity of the (002) plane to the peak intensity of the (110) plane (I(002)/I(110)) in a range of ≥ 60 to ≤ 120, when XRD is measured using CuKα rays. For example, the average particle diameter of the first natural graphite NNG may be in a range of ≥ 12 µm to ≤ 20 µm.

Each of the first and second artificial graphites NAG and AG may be the same as, or similar to, the artificial graphite described above with reference to FIGS. 6 and 7. For example, the average particle diameter of the first and second artificial graphites NAG and AG may be in a range of ≥ 12 µm to ≤ 15 µm, respectively.

The content of the first natural graphite NNG in the first negative electrode active material layer AML21 may be in a range of ≥ 45 wt% to ≤ 80 wt%, or ≥ 50 wt% to ≤ 75 wt%, with respect to 100 wt% of the total of the first negative electrode active material layer AML21. The content of the first artificial graphite NAG in the first negative electrode active material layer AML21 may be in a range of ≥ 20 wt% to ≤ 50 wt%, or ≥ 25 wt% to ≤ 45 wt%, with respect to 100 wt% of the total of the first negative electrode active material layer AML21. The ratio of the weight of the natural graphite NNG to the weight of the artificial graphite NAG in the first negative electrode active material layer AML21 may be in a range of ≥ 1 to ≤ 10, ≥ 1 to ≤ 5, or ≥ 1 to ≤ 3.

The content of the second natural graphite NG in the second negative electrode active material layer AML22 may be in a range of ≥ 45 wt% to ≤ 80 wt%, or ≥ 50 wt% to ≤ 75 wt%, with respect to 100 wt% of the total of the second negative electrode active material layer AML22. The content of the second artificial graphite AG in the second negative electrode active material layer AML22 may be in a range of ≥ 20 wt% to ≤ 50 wt% or ≥ 25 wt% to ≤ 45 wt% with respect to 100 wt% of the total of the second negative electrode active material layer AML21. The ratio of the weight of the second natural graphite NG to the weight of the second artificial graphite AG in the second negative electrode active material layer AML22 may be in a range of ≥ 1 to ≤ 10, ≥ 1 to ≤ 5, or ≥ 1 to ≤ 3.

A portion having a significant effect on the rapid charge characteristics is the upper negative electrode active material layer, into which lithium ions are first intercalated/deintercalated during the charge and discharge process. Therefore, when the second negative electrode active material layer AML2 includes improved natural graphite NG, the first negative electrode active material may have desired or improved rapid charge performance even when including the first natural graphite NNG which characteristics are not precisely controlled.

Hereinafter, the present disclosure is described in more detail through examples. However, the examples are intended to exemplify the present disclosure, and the scope of the present disclosure is not limited thereto.

### Example 1

### Preparation of Natural Graphite with Improved Properties:

Spherical natural graphite was mixed with pitch to form an aggregate. The aggregate was subjected to a first heat treatment and the surface was coated with pitch. After that, a second heat treatment process was performed to prepare natural graphite with an average particle diameter of about 7 µm.

### Manufacture of Negative Electrode:

The produced natural graphite and artificial graphite having an average particle diameter of about 14 µm (obtained via the measurement method as described above, this goes for the whole experimental section) were mixed at a weight ratio of about 75:25. The graphite and silicon were mixed at a weight ratio of about 98:2 to produce a first negative electrode active material. The first negative electrode active material and a mixture of styrene butadiene rubber (SBR) and carboxymethyl cellulose (CMC) at a weight ratio of about 1:1 were mixed at a weight ratio of about 96:4 to prepare a first negative electrode active material slurry.

The produced natural graphite and artificial graphite having an average particle diameter of about 14 µm were mixed at a weight ratio of about 50:50. The graphite and silicon were mixed at a weight ratio of about 94:6 to produce a second negative electrode active material. The second negative electrode active material and the mixture of styrene butadiene rubber (SBR) and carboxymethyl cellulose (CMC) at a weight ratio of about 1:1 were mixed at a weight ratio of about 99:1 to prepare a second negative electrode active material slurry.

The first negative electrode active material slurry was coated on a copper foil having a thickness of about 8 µm to a thickness of about 40 µm, dried at about 100°C for about 1 hour or more, and then rolled to manufacture a first negative electrode. The second negative electrode active material slurry was coated on the first negative electrode to a thickness of about 40 µm, dried at about 100°C for about 1 hour or more, and then rolled to manufacture a negative electrode.

### Manufacture of Positive Electrode:

A positive electrode active material (LiNi_{0.6}Co_{0.2}Mn_{0.2}O₂), a carbon conductive agent (Super P), and a polyvinylidene fluoride (PVDF) binder solution were added and mixed to prepare an active material slurry. In the active material slurry, the mixing weight ratio of active material:conductive agent:binder was about 98:1:1. The active material slurry was coated on an aluminum current collector having a thickness of about 12 micrometers using a thick film coater, dried at about 120°C for about 1 hour or more, and then rolled (pressed) to manufacture a positive electrode.

### Manufacture of Rechargeable Lithium Battery:

### (1) Manufacture of Full Cell

The manufactured negative electrode, a PTFE separator, and the positive electrode were laminated to manufacture a rechargeable lithium battery. As an electrolyte, 1.3 M LiPF₆ dissolved in a mixed solvent of ethylene carbonate (EC): ethyl methyl carbonate (EMC): diethyl carbonate (DEC) (about 3:5:2 volume ratio) was used to manufacture a coin full cell.

### (2) Manufacture of Half Cell

The manufactured negative electrode, a PE separator, and a lithium counter electrode were laminated to manufacture a rechargeable lithium battery. A coin half cell was manufactured using 1.3 M LiPF₆ dissolved in a mixed solvent of ethylene carbonate (EC): ethyl methyl carbonate (EMC): diethyl carbonate (DEC) (volume ratio of about 3:5:2) as an electrolyte.

### Example 2

A negative electrode, a positive electrode, and a rechargeable lithium battery were manufactured in the same manner as in Example 1, with a difference that natural graphite and artificial graphite were mixed in a weight ratio of about 75:25 during preparing the second negative electrode active material slurry.

### Comparative Example 1

### Preparation of Natural Graphite:

Spherical natural graphite was mixed with pitch to form an aggregate. A heat treatment process was performed on the aggregate to prepare natural graphite having an average particle diameter of about 16 µm.

### Manufacture of Negative Electrode:

The produced natural graphite and artificial graphite having an average particle diameter of about 14 µm were mixed at a weight ratio of about 75:25 to prepare a first negative electrode active material. The first negative electrode active material and a mixture of the first negative electrode active material with styrene butadiene rubber (SBR) and carboxymethyl cellulose (CMC) at a weight ratio of about 1:1 were mixed at a weight ratio of about 96:4 to prepare a first negative electrode active material slurry.

The produced natural graphite and artificial graphite having an average particle diameter of about 14 µm were mixed at a weight ratio of about 25:75 to prepare a second negative electrode active material. The second negative electrode active material and a mixture of styrene butadiene rubber (SBR) and carboxymethyl cellulose (CMC) at a weight ratio of about 1:1 were mixed at a weight ratio of about 99:1 to prepare a second negative electrode active material slurry.

The first negative electrode active material slurry was coated on a copper foil having a thickness of about 8 µm to a thickness of about 40 µm, dried at about 100°C for about 1 hour or more, and then rolled to manufacture a first negative electrode. The second negative electrode active material slurry was coated on the first negative electrode to a thickness of about 40 µm, dried at about 100°C for about 1 hour or more, and then rolled to manufacture a negative electrode.

### Manufacture of Rechargeable Lithium Battery:

A positive electrode and a rechargeable lithium battery were manufactured in the same manner as in Example 1.

### Comparative Example 2

A negative electrode, a positive electrode, and a rechargeable lithium battery were manufactured in the same manner as in Comparative Example 1, with a difference that natural graphite and artificial graphite were mixed in a weight ratio of about 50:50 during preparing the second negative electrode active material slurry.

### Comparative Example 3

A negative electrode, a positive electrode, and a rechargeable lithium battery were manufactured in the same manner as in Comparative Example 1, with a difference that natural graphite and artificial graphite were mixed in a weight ratio of about 75:25 during preparing the second negative electrode active material slurry.

### Evaluation Example 1

Ion transfer resistance was measured for the half cells manufactured according to the Examples and Comparative Examples, and the results are shown in Table 1 below.

Ion transfer resistance was measured by measuring AC resistance in a frequency range of about 30 mHz to about 10 kHz using an electrochemical impedance spectroscopy (EIS) measuring device of Biologics VMP3.

### Evaluation Example 2

Internal resistance was measured for the full cells manufactured according to the Examples and Comparative Examples using the method below, and the results are shown in Table 1 below.

A full cell was charged at a constant current of about 0.2 C rate at about 25°C until a voltage reached about 4.25 V (vs. Li), and then cut-off at a current of about 0.05 C rate while maintaining about 4.25 V at a constant voltage mode. Then, the full cell was discharged at a constant current of about 0.2 C rate until a voltage reached about 2.8 V (vs. Li) (formation cycle). A voltage drop (V) that occurred at a point where a battery that has completed the formation cycle was charged at SOC50 (when the total charge capacity of the battery was about 100%, a charging state to about 50% of a charge capacity, which means a state discharged to about 50% in terms of a discharging state) at about 1 C for about 10 seconds, was measured. The resistance value was obtained from the measured voltage and an applied current (about 1 C), and the results are expressed as a direct current internal resistance (DC-IR).

**Table 1:**

| Division | First negative electrode active material layer (natural graphite: artificial graphite) | Second negative electrode active material layer (natural graphite: artificial graphite) | Ion transfer resistance (Ω·cm²) | DC IR (Ω) |
|---|---|---|---|---|
| Example 1 | 75: 25 | 50: 50 | 10.38 | 6.61 |
| Example 2 | 75: 25 | 75: 25 | 8.84 | 6.66 |
| Comparative Example 1 | 75: 25 | 25: 75 | 11.44 | 6.82 |
| Comparative Example 2 | 75: 25 | 50: 50 | 12.7 | 6.86 |
| Comparative Example 3 | 75: 25 | 75: 25 | 13.5 | 6.91 |

Referring to Table 1, it is confirmed that the half cells according to the Examples have smaller ion transfer resistances and thus better ion conductivity than the half cells according to the Comparative Examples. In addition, it is confirmed that the full cells according to the Examples have smaller internal resistances than the full cells according to the Comparative Examples, which are advantageous for rapid charging.

### Evaluation Example 3

The rapid charging characteristics of the full cells manufactured according to the Examples and Comparative Examples were evaluated in the method below.

A full cell that completed the formation cycle was charged to SOC20, and the battery in the SOC20 state was charged at a constant current at a current of about 3.6 C rate at about 30°C to reach SOC80 (about 4.25V cut-off condition). The time taken to reach SOC80 and the maximum voltage are shown in Table 2 below.

The full cell that completed the formation cycle was charged to SOC8, and the battery in the SOC8 state was charged at a constant current at a current of about 4.8 C rate at about 25°C to reach SOC80 (about 4.25V cut-off condition). The time taken to reach SOC80 and the maximum voltage are shown in Table 2 below.

**Table 2:**

| Division | 3.6 C rate charge | | | 4.8 C rate charge | | |
|---|---|---|---|---|---|---|
| | Charge SOC (%) | Maximum voltage (V) | Charging time (min) | Charge SOC (%) | Maximum voltage (V) | Chargin g time (min) |
| Example 1 | 80 | 4.216 | 9.95 | 76.4 | 4.274 | 8.51 |
| Example 2 | 80 | 4.213 | 9.97 | 76.3 | 4.274 | 8.49 |
| Comparative Example 1 | 80 | 4.232 | 9.88 | 72.9 | 4.291 | 7.98 |
| Comparative Example 2 | 80 | 4.232 | 9.88 | 72.5 | 4.293 | 7.97 |
| Comparative Example 3 | 80 | 4.234 | 9.88 | 71.4 | 4.295 | 7.95 |

Referring to Table 2, it is confirmed that the rechargeable lithium batteries according to the Examples have lower maximum voltages than the rechargeable lithium batteries according to the Comparative Examples, thereby effectively reducing or preventing overvoltage.

The negative electrode for a rechargeable lithium battery according to the present disclosure may have improved charging characteristics by including natural graphite with controlled size, orientation, and the like. The rechargeable lithium battery according to examples of the present disclosure has desired or improved capacity, and may have improved rapid charging performance.

Although the example embodiments of the present disclosure have been described, it is understood that the present disclosure should not be limited to these example embodiments but various changes and modifications can be made by one ordinary skilled in the art within the spirit and scope of the present disclosure as hereinafter claimed.

## Claims

1. A negative electrode (20) for a rechargeable lithium battery (100), the negative electrode (20) comprising:
a negative electrode current collector (COL1); and
a negative electrode active material layer on the negative electrode current collector (COL1), wherein:
the negative electrode active material layer comprises a first negative electrode active material layer and a second negative electrode active material layer, laminated on the negative electrode current collector (COL1),
each of the first and second negative electrode active material layers comprises natural graphite and artificial graphite,
an average particle diameter (D50) of the natural graphite is smaller than an average particle diameter of the artificial graphite, and
a ratio of the weight of the natural graphite to the weight of the artificial graphite in the second negative electrode active material layer is in a range of ≥ 1 to ≤ 5.

2. The negative electrode (20) for a rechargeable lithium battery (100) of claim 1, wherein the ratio of the weight of the natural graphite to the weight of the artificial graphite in the second negative electrode active material layer is in a range of ≥ 1 to ≤ 3.

3. The negative electrode (20) for a rechargeable lithium battery (100) of claim 1 or 2, wherein the average particle diameter of the natural graphite is in a range of ≥ 5 µm to ≤ 10 µm.

4. The negative electrode (20) for a rechargeable lithium battery (100) of any of the claims 1 to 3, wherein the natural graphite, when measured by XRD using CuKα rays, has a ratio of the peak intensity of a (002) plane to the peak intensity of a (110) plane (I(002)/I(110)) in a range of ≥ 45 to ≤ 75.

5. The negative electrode (20) for a rechargeable lithium battery (100) of of any of the claims 1 to 4, wherein a specific surface area of the natural graphite is in a range of ≥ 1.8 m²/g to ≤ 2.2 m²/g.

6. The negative electrode (20) for a rechargeable lithium battery (100) of of any of the claims 1 to 5, wherein a specific capacity of the natural graphite is in a range of ≥ 355 mAh/g to ≤ 360 mAh/g.

7. The negative electrode (20) for a rechargeable lithium battery (100) of of any of the claims 1 to 6, wherein the content of the natural graphite comprised in each of the first negative electrode active material layer and the second negative electrode active material layer is in a range of ≥ 45 wt% to ≤ 80 wt%.

8. The negative electrode (20) for a rechargeable lithium battery (100) of of any of the claims 1 to 7, wherein at least one of the first negative electrode active material layer and second negative electrode active material layer further comprises silicon.

9. A negative electrode (20) for a rechargeable lithium battery (100) according to any of the claims 1 to 8, the negative electrode (20) comprising:
a negative electrode current collector (COL1); and
a negative electrode active material layer on the negative electrode current collector (COL1), wherein:
the negative electrode active material layer comprises natural graphite and artificial graphite,
the negative electrode active material layer comprises a first region adjacent to the negative electrode current collector (COL1) and a second region adjacent to an upper surface of the negative electrode active material layer,
the content of the natural graphite comprised in each of the first region and the second region is in a range of ≥ 45 wt% to ≤ 80 wt%, and
an average particle diameter of the natural graphite is smaller than an average particle diameter of the artificial graphite.

10. The negative electrode (20) for a rechargeable lithium battery (100) of claim 9, wherein a ratio of the content of the natural graphite comprised in the second region to the content of the natural graphite comprised in the first region is in a range of ≥ 0.8 to ≤ 1.4.

11. The negative electrode (20) for a rechargeable lithium battery (100) of claim 9 or 10, wherein a ratio of the weight of the natural graphite in the second region to the weight of the artificial graphite in the second region is in a range of ≥ 1 to ≤ 3.

12. The negative electrode (20) for a rechargeable lithium battery (100) of of any of the claims 9 to 11, wherein the average particle diameter (D50) of the natural graphite is in a range of ≥ 5 µm to ≤ 10 µm, and
wherein the natural graphite, when measured by XRD using CuKα rays, has a ratio of the peak intensity of a (002) plane to the peak intensity of a (110) plane (I(002)/I(110)) in a range of ≥ 45 to ≤ 75.

13. A negative electrode (20) for a rechargeable lithium battery (100) according to any of the claims 1 to 12, the negative electrode (20) comprising:
a negative electrode current collector (COL1); and
a negative electrode active material layer on the negative electrode current collector (COL1), wherein:
the negative electrode active material layer comprises a first negative electrode active material layer and a second negative electrode active material layer, laminated on the negative electrode current collector (COL1),
the first negative electrode active material layer comprises a first natural graphite and a first artificial graphite,
the second negative electrode active material layer comprises a second natural graphite and a second artificial graphite,
an average particle diameter of the second natural graphite is smaller than an average particle diameter of the first natural graphite, and
a ratio of the weight of the second natural graphite in the second negative electrode active material layer to the weight of the second artificial graphite in the second negative electrode active material layer is in a range of ≥ 1 to ≤ 3.

14. The negative electrode (20) for a rechargeable lithium battery (100) of claim 13, wherein:
the average particle diameter of the second natural graphite is in a range of ≥ 5 µm to ≤ 10 µm, and
the average particle diameter of the first natural graphite is in a range of ≥ 12 µm to ≤ 20 µm.

15. The negative electrode (20) for a rechargeable lithium battery (100) of claim 13 or 14, wherein:
the second natural graphite, when measured by XRD using CuKα rays, has a ratio of the peak intensity of a (002) plane to the peak intensity of a (110) plane (I(002)/I(110)) in a range of ≥ 45 to ≤ 75, and
the first natural graphite, when measured by XRD using CuKα rays, has a ratio of the peak intensity of a (002) plane to the peak intensity of a (110) plane (I(002)/I(110)) in a range of ≥ 60 to ≤ 120.
